# EUROPEAN PATENT APPLICATION

(11) **EP 4 462 131 A1**
(43) Date of publication of application: **13.11.2024**
(21) Application number: 24174708.8
(22) Date of filing: 08.05.2024
(51) Int. Cl.: G01N 35/10, G01F 11/28

(54) **METHOD AND DEVICE FOR FLUIDIC DECOUPLING**

(30) Priority: 11.05.2023 LU 103122
(71) Applicant: Stratec SE, 75217 Birkenfeld (DE)
(72) Inventor: Kashef, Jubin, 75217 Birkenfeld (DE); Otto, Maik, 75217 Birkenfeld (DE)
(74) Representative: Tegethoff, Sebastian

(57) **Abstract**

The present disclosure provides a fluidic system, comprising a fluidic path comprising a reagent container which is exchangeable connected to the fluidic path, a pump which is arranged downstream of the reagent container; a filter which is arranged downstream of the of the pump; an intermediate vessel for storing fluids which is arranged downstream of the filter, wherein the intermediate vessel comprises a level sensor for measuring the fluid level in the intermediate vessel; a precision pump which is arranged downstream of the intermediate vessel; and a dispense port. Another object of the present disclosure relates to a method for dispensing of a fluid, comprising the steps of transferring a fluid in a fluidic path by a pump into a filter; filtering a fluid through the filter having a defined volume and pore-size; transferring the filtered fluid from the filter into an intermediate vessel; transferring the filtered fluid from the intermediate vessel with a precision pump which is arranged downstream of the intermediate vessel in the fluidic path to a dispense port

## Description

### Field of the Invention

The invention relates to a method and device for fluidic decoupling.

### Brief description of the related art

Devices for use in clinical diagnostics and life sciences are produced by a number of companies. For example, STRATEC^{®} SE, Germany, manufactures numerous devices for diagnostic specimen handling and detection for use in automated analyser systems and other laboratory instrumentation.

The use of precision pumps in analytical systems in human diagnostics is becoming increasingly preferred and driven forward, as they stand out primarily due to their highest precision. This precision supports a robust and stable assay workflow, which is used in particular in *in vitro* diagnostics. Here, samples derived from the human body, including blood, saliva, urine, and tissue donations are processed to the point of providing important information (1) about physiological or pathological conditions, (2) about genetic abnormalities, (3) for testing for compatibility of blood donations in potential recipients, or (4) for monitoring therapeutic interventions.

To process the above and very different samples, a variety of assays and associated reagents are needed, which can differ significantly in their chemical structure. Many reagents are buffer solutions (with or without added surfactants) or contain fluorescent or organic dyes. Often these reagents have an unfavourable solubility product, so that precipitated molecules or crystals or even suspended solids in different sizes and shapes are found in the reagent liquid. These macromolecules can in turn inhibit individual assay sub-reactions and thus falsify the final result.

In the design of analytical systems, this risk of a false negative result in the worst case is mitigated, among other things, by installing filters in the fluidic path. Filters of different volume, material and pore size are used to generate the optimum conditions specifically for each reagent. A major disadvantage due to the installation of a filter is an increased flow resistance in the system, which in turn significantly undermines the advantages of a precision pump.

A filter placed on the suction side and thus increased flow resistance can lead to very high negative pressures in a precision pump. Depending on the pump design, these constant negative pressures promote outgassing of the coupling medium in the precision pump or direct outgassing of the reagents, which irreversibly impairs both high performance and reliability. At very high negative pressures, cavitation could even occur in the pump in the worst case, which would mechanically destroy the pump.

A filter installed on the displacement side, may cause an increased flow resistance which can lead in turn to motor step losses of the precision pump. Furthermore, a filter additionally introduces an enormous inertia into the fluidic system, which in particular significantly deteriorates the dispense accuracy of the precision pump and thus questions the validity of the assay result.

Published Chinese patent application CN 108 395 019 A discloses a water processing device with an automatic supplementation function for a boiler. The water processing device comprises a Y-shaped filter, a water pipe, a quartz sand filter, a full-automatic water softener and a raw water tank, wherein the water pipe is provided with the Y-shaped filter; the quartz sand filter is arranged near the Y-shaped filter; the full-automatic watersoftener is arranged near the quartz sand filter; the raw water tank is arranged near the full-automatic water softener; a raw water pump is arranged near the raw water tank; a fine filter is arranged near the raw water pump; a high-pressure pump is arranged near the fine filter; a reverse osmosis unit is arranged near the high-pressure pump; a middle water tank is arranged below the reverse osmosis unit; a degassing tower is arranged on the top of the middle water tank. The water processing device has the beneficial effects of simple structure, convenience in use, good filtering effect and good water purification effect, incrustations can be reduced, the serve life of the boiler is prolonged, and automatic water supplementation can be realized through a controller.

Published Japanese patent application JP 2017 170314 A provides a filter device which makes supercooling unnecessary, thereby, prevents influence to quality, at the same time, makes heating appliance unnecessary, permits power-saving and simplification of the device and can shorten a time of filter treatment. A filter device which filters raw liquid and takes out filtrate includes: a filter machine main body for filtering the raw liquid; a liquid supply channel for supplying the raw liquid or the filtrate to the filter machine main body; a filtrate transfer channel for transferring the filtrate filtered by the filter machine main body; a first heat exchanger for performing heat exchange between the raw material of the liquid supply channel and the filtrate of the filtrate transfer channel; and a second heat exchanger for performing heat exchange between the filtrate or the raw liquid of the liquid supply channel, and a coolant.

Published European patent application EP 1 165 010 A2 discloses a precision dispenser for liquids consisting of: a first pump fed by a flask containing liquid, connected thereto via an attachment provided with a suction tube; an intermediate reservoir fed by the first pump and provided with one or more level probes; a second, high-precision, pump downstream of said reservoir; a three-way solenoid valve set downstream of the pump, from which it receives the liquid at input, and having two output ways, one output leading to the reservoir and the other leading to a final receptacle for collecting the liquid delivered; and a microprocessor unit for control and management of the pumps, probes and maintenance functions.

Thus, there is a need for a method and device avoiding the disadvantages from solutions known from the prior art.

### Summary of the Invention

The present invention provides a fluidic system, comprising a fluidic path, containing
- a reagent container which is exchangeable connected to the fluidic path,
- a pump which is arranged downstream of the reagent container;
- a filter which is arranged downstream of the pump;
- an intermediate vessel for storing fluids which is arranged downstream of the filter, wherein the intermediate vessel comprises a level sensor for measuring the fluid level in the intermediate vessel;
- a precision pump which is a piston actuated pump with a delivery volume of <2ml per delivery and an accuracy better than 5% and a coefficient of variation of <3%, and which is arranged downstream of the intermediate vessel; and
- a dispense port.

In an embodiment of the system according to the present disclosure, the intermediate vessel comprises a heating or cooling.

Another aspect of a system according to the disclosure relates to the sensor which is selected from the group comprising a capacitive sensor, an ultra-sonic sensor and a float sensor.

The system may also comprise a plurality of reagent container arranged upstream of the pump in the fluidic path.

Another object of the present disclosure relates to a method for dispensing of a fluid, conatining the steps of:
- transferring a fluid in a fluidic path by a pump into a filter;
- filtering a fluid through the filter having a defined volume and pore-size;
- transferring the filtered fluid from the filter into an intermediate vessel;
- transferring the filtered fluid from the intermediate vessel with a precision pump which is a piston actuated pump with a delivery volume of <2ml per delivery and an accuracy better than 5% and a coefficient of variation of <3%, and which is arranged downstream of the intermediate vessel in the fluidic path to a dispense port.

The method may also comprise the step of heating or cooling of the fluid in the intermediate vessel.

In an embodiment, the comprises the step of measuring the fluid level in the intermediate vessel with a level sensor.

It is intended that the method may comprise the step of dispensing the fluid in a high-throughput system.

Another object of the present disclosure relates to the use of a fluidic path as defined above in a high-throughput system.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:

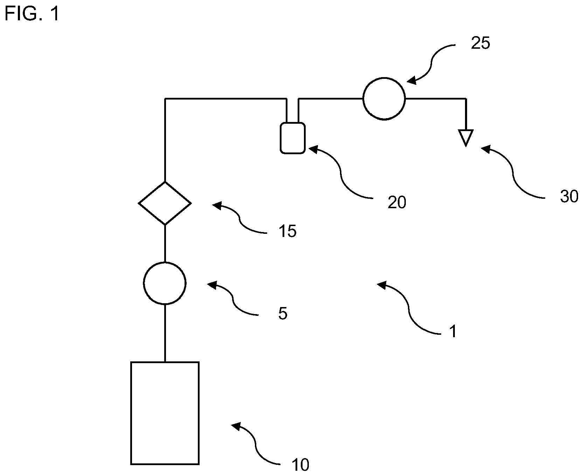

FIG. 1 shows a design for decoupling a precision pump by means of an intermediate vessel.

### Detailed Description of the Invention and the Figures

The technical problem is solved by the independent claims. The dependent claims cover further specific embodiments of the invention.

A fluidic system according to the present disclosure is based on the implementation of an intermediate vessel installed in the fluidic path between a filter placed on the intake side and a precision pump.

The term high-throughput system relates to a system allowing to quickly run hundreds - even thousands - of drug screens at a given time. It relies on robotics, artificial intelligence and other advanced technologies to test targets against a vast library of compounds.

The present invention provides the implementation of an intermediate vessel between the filter and a precision pump for avoiding an increased flow resistance due to the installation of a filter in the fluidic path of an analyser system. The intermediate vessel according to the present disclosure allows the use of the precision pump, which is capable of transferring defined small volumes of a fluid, even in high-throughput applications despite an installed filter and, accordingly, also significantly increases the reliability of the whole system. The term high-throughput system refers to systems allowing to rapidly test thousands to millions of samples for a biological property or activity. In addition, the installation of the intermediate vessel makes intensive priming after the exchange of reagent bottles obsolete, so that reagent volumes can be significantly reduced.

A fluid within the meaning of the present disclosure relates to a liquid, a gas or a mixture thereof that is capable of flowing, wherein the fluid may comprise solids like particles.

The term precision pump relates to the above-mentioned definition concerning piston actuated pumps with a delivery volume of <2ml per delivery and an accuracy better than 5% and a CV (coefficient of variation) of <3%.

It is to be noted that due to the requirement of a precisely and reliably dispensing fluids, a fluidic path according to the present disclosure does not comprise any further elements than the claimed elements.

In order to be able to use both, the advantages of a precision pump and a filter at the same time in an analyzer system, it is necessary by design to fluidically decouple the precision pump from a built-in filter. FIG. 1 schematically shows a possible design of a fluidic path of a fluidic system 1 for decoupling the precision pump by means of an intermediate vessel. A reagent container 10 serves as a reservoir for providing a fluid. Pump 5 sucks the fluid from reagent container 10. The fluid will reach through filter 15 the intermediate vessel 20 which is arranged before precision pump 25. The fluid will be dispensed through dispense port 30 that is arranged behind precision pump 25.

The required reagent is transferred via a pump (e.g. diaphragm pump) through a filter with a defined volume and pore size in a range between 1 - 100 µ into an intermediate vessel. This intermediate vessel now contains a small and pre-filtered reagent volume which can be used directly by the precision pump. Due to the very small volume of the intermediate vessel in a range between 10 - 50 ml depending on the respective application, and its close placement to the dispense port, the time for precipitate formation is significantly reduced, so that no further filter is needed by the precision pump on the dispense side. Thus, the precision pump in this design is not exposed to any negative influences such as critical negative/positive pressures, ensuring its functionality in its entirety.

With the aid of an integrated level sensor in or on the intermediate vessel, the clogging of the filter can be indirectly detected via the filling times. The sensor can be a capacitive sensor, an ultra-sonic sensor, or a float sensor. This means that the clogged filter can be replaced in good time and a possible failure of the system can be prevented. Furthermore, the intermediate vessel can be heated or cooled depending on the assay or the reagent properties. Thus, the stability of the reagent is ensured or the reagent can be brought to the necessary assay temperature. Furthermore, the formation of precipitates can be minimized. With the help of level sensors as well as the temperature control of the intermediate vessel, further measures could be implemented to further optimize the reliability of the analysis system.

Especially in high-throughput systems, several reagent bottles are used per day. By exchanging an empty reagent bottle with a full one, air is very often introduced into the fluidic system. A now existing air/reagent mixture again massively deteriorates the dispense performance and can further lead to major contamination in the system by reagent splashes. To mitigate the risk of worsening dispense performance, in practice, after replacing a reagent bottle, the system is flushed with new reagent for a very long time. This common practice removes potential air bubbles from the fluidic system but requires a very large amount of new reagent to flush through. With the implementation of an intermediate vessel in the fluidic path (FIG. 1), this purging is no longer needed because the air introduced during reagent bottle exchange can escape through this intermediate vessel and thus does not reach a dispense port.

In summary, the introduction of an intermediate vessel in the fluidic path not only ensures the functionality of a precision pump but can additionally save a large amount of reagent by eliminating the need for purging during reagent bottle exchange. This not only reduces costs but also process time and also increases the sustainability of the product.

In currently installed systems, no filters are used together with a precision pump, or significant losses in the performance of the precision pump in terms of accuracy and precision are expected. To mitigate this disadvantage, the aspirate and dispense speeds must be reduced enormously. The speed reduction, however, has the disadvantage that these systems cannot be used for high sample throughput.

The implementation of an intermediate vessel between a filter placed on the intake side and a precision pump is related to the following advantages:
- decoupling of the precision pump from increased flow resistances caused by the filter used;
- the precision pump can process a filtered reagent with a very high accuracy and precision without losing reliability.
- the design allows high throughput of samples, since the speeds of the precision pump do not need to be reduced.
- intensive priming of the fluidic pathway after reagent bottle exchange is no longer necessary.
- the intermediate container could be heated or cooled depending on the reagent to ensure the stability of the reagent, to get the reagent to the necessary assay temperature or to minimize the formation of precipitates.
- a level sensor could be used to measure the filling time of the intermediate vessel and thus indirectly monitor the clogging of the filter.
- the intermediate vessel could be defined as part of a tubing assembly, which can be easily exchanged during planned maintenance and thus does not require extensive cleaning.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: fluidic system
- 5: pump
- 10: reagent container
- 15: filter
- 20: intermediate vessel
- 25: precision pump
- 30: dispense port

## Claims

1. A fluidic system, comprising a fluidic path containing
- a reagent container which is exchangeable connected to the fluidic path,
- a pump which is arranged downstream of the reagent container;
- a filter which is arranged downstream of the pump;
- an intermediate vessel for storing fluids which is arranged downstream of the filter, wherein the intermediate vessel comprises a level sensor for measuring the fluid level in the intermediate vessel;
- a precision pump which is a piston actuated pump with a delivery volume of <2ml per delivery and an accuracy better than 5% and a coefficient of variation of <3%, and which is arranged downstream of the intermediate vessel; and
- a dispense port.

2. The system of claim 1, wherein the intermediate vessel comprises a heating or cooling.

3. The system of claim 1 or 2, wherein the sensor is selected from the group comprising a capacitive sensor, an ultra-sonic sensor and a float sensor.

4. The system of any one of claims 1 to 3, wherein a plurality of reagent container is arranged upstream of the pump in the fluidic path.

5. A method for dispensing of a fluid, containing the steps of:
- transferring a fluid in a fluidic path by a pump into a filter;
- filtering a fluid through the filter having a defined volume and pore-size;
- transferring the filtered fluid from the filter into an intermediate vessel; and
- transferring the filtered fluid from the intermediate vessel with a precision pump which is a piston actuated pump with a delivery volume of <2ml per delivery and an accuracy better than 5% and a coefficient of variation of <3%, and which is arranged downstream of the intermediate vessel in the fluidic path to a dispense port.

6. The method of claim 5, comprising the step of heating or cooling of the fluid in the intermediate vessel.

7. The method of claim 5 or 6, comprising the step of measuring the fluid level in the intermediate vessel with a level sensor.

8. The method of any one of claims 5 to 7, comprising the step of dispensing the fluid in a high-throughput system.

9. The use of a fluidic path according to claims 1 to 8 in a high-throughput system.
